Europäisches Patentamt

European Patent Office

Office européen des brevets

(11) Publication number: **0 423 616 A1**

# EUROPEAN PATENT APPLICATION

(21) Application number: 90119489.4

(22) Date of filing: 11.10.90

(51) Int. Cl.5: **H02K 5/10**, H02K 7/14, H02K 9/14, F16C 27/06

(30) Priority: 16.10.89 IT 2193189 U

(43) Date of publication of application:
24.04.91 Bulletin 91/17

(84) Designated Contracting States:
DE ES FR GB

(71) Applicant: ELCO S.p.A.
Via Marconi 1
I-20065 Inzago (MI)(IT)

(72) Inventor: Pedretti, Roberto
Via Volpati, 7
Como(IT)
Inventor: Colombo, Enzo
Via Palma il Vecchio, 10
Verdello (BG)(IT)

(74) Representative: Dr. Ing. A. Racheli & C.
Viale San Michele del Carso, 4
I-20144 Milano(IT)

(54) **Electric motor of minimal axial dimensions, particularly for use with fans.**

(57) An electric motor, particularly for use with fans, comprising a stator (2) fixed to the side wall (10) of a casing (8), and an internal rotor (4) fixed to a central shaft (5) supported, by means of bearings (6, 7), between the bottom (11) of said casing (8) and its sealed cover (9). One end (5') of the shaft (5) protrudes from a hole (12) drilled in the bottom (11) of the casing (8) and has a removable fan-bearing cap (27) attached to it. This fan-bearing cap has an extension (28) to which a fan (29) is attached and is substantially parallel to said side wall (10) of the casing (8) and covers, at least partially, the stator.

EP 0 423 616 A1

## ELECTRIC MOTOR OF MINIMAL AXIAL DIMENSIONS, PARTICULARLY FOR USE WITH FANS

The present utility model refers to an electric motor, particularly for use with fans, which is waterproof and sealed against the infiltration of solid bodies and which allows for a minimal axial dimension of the motor/fan unit.

Fan motors of this type are already known: in order to reduce the axial dimension the fan is positioned around the body of the motor by means of a protrusion fixed to the rotor.

Generally, these known motors do not have a very robust structure, require a lot of machinings, are not easily assembled or disassembled and are sealed from the infiltration of foreign bodies by means of particular expedients, such as internal labyrinths or sealing devices between moving parts.

One known proposed solution (Italian utility model application No. 20511 B/88) wherein the rotor is placed inside the stator, consists in supporting the rotor in such a way that it can rotate around a fixed shaft mounted in cantilever fashion on the motor casing, to which the stator is fixed. A cap extending beyond the casing (and, therefore, the stator) is attached to the rotor and a fan is attached to it. In order to close the motor, it is necessary to place a seal between the casing and the terminal edge of the cap (that is, between a fixed and rotating part), with all of the disadvantages described above.

A solution of this kind, involving a projecting shaft, does not allow for a sufficiently rigid structure and accentuates vibration.

Furthermore, in order to disassemble the fan, it is necessary to extract the rotor, which can only be done by opening the motor.

The aim of this invention is to eliminate the inconveniences associated with this known solution and with other solutions existing on the market by proposing a compact electric motor, particularly for use with fans, consisting of only few easily machined parts which can be easily assembled and which guarantee optimum protection against the infiltration of external agents.

This and other objectives have been reached by the electric motor according to the invention, which substantially consists of a stator fixed to an outer casing and an internal rotor fixed to a central shaft which is supported, by means of bearings, between said casing and a sealed cover, a fan-bearing cap which extends, at least partially, over the stator, being attached to the end of the shaft supported by the casing.

Preferably, the end of said shaft which is supported by the casing, slightly protrudes from the casing itself and has a threaded hole so that the fan-bearing cap can be attached to it by means of a screw after the interposition of a hub force fit to the end of the shaft.

In this way, the fan can be easily removed by the simple turning of the screw.

The mounting hub of the fan-bearing cap is housed in a recess of the casing in order to further reduce axial dimension and should preferably have internal finning in order to assist in cooling the casing and, consequently, the motor.

The cap could be further provided with slits and external fins positioned in such a way as to capture the air when the cap is rotating and thus further assist in cooling the motor.

Special rubber bushings are placed in correspondence with the external thrust blocks of the shaft support bearings which, in addition to absorbing vibrations, compensate any axial play due to differences in the size of the parts (in particular, the casing and the cover) between which the bearings must function.

With such a structure, the electric motor can reach an optimum level of protection (IP 55) against the infiltration of water or solid bodies with only two components of simple construction (the casing and the cover) by means of watertight bearings and a toroidal ring between the cover and the casing.

In fact, the only machinings which need to be done on the casing are those for obtaining the ledge for the cover and the housings for the stator and bearing, all of which can be done simultaneosly. The machinings on the cover consist in obtaining the ledge for the casing and the relevant bearing housing, both of which can also be done simultaneously.

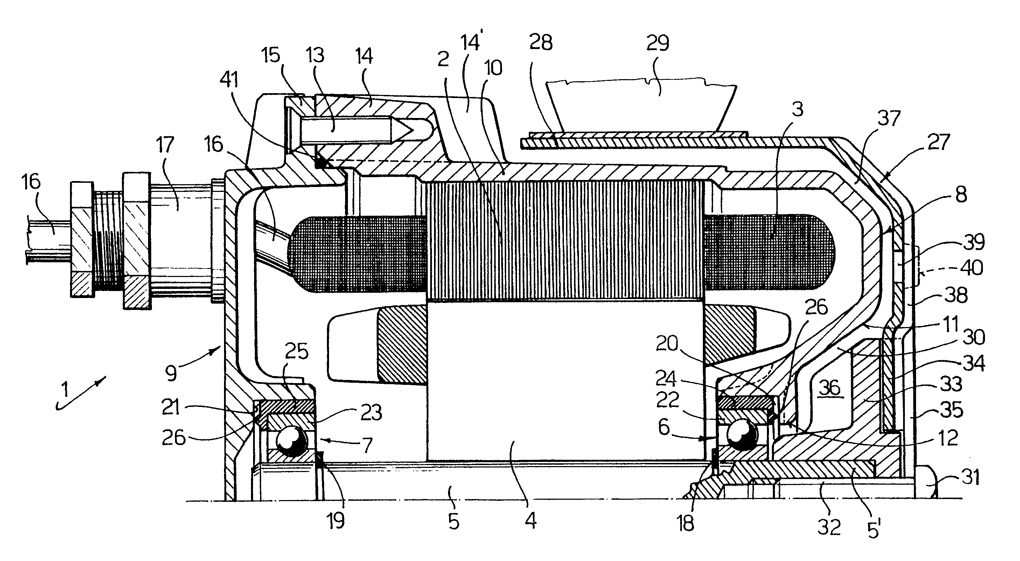

Other characteristics of this invention will become clearer from the following detailed description, which refers to a form intended as purely illustrative and in no way limiting, shown in the accompanying drawing containing a longitudinal half-section of an electric motor for fans realized according to this invention.

In the figure, the reference number 1 indicates the electric motor according to this invention considered as a whole, comprising a stator 2, whose winding is indicated by 3, and an internal rotor 4, fixed to a central shaft 5, which is supported by means of sealed bearings 6 and 7 between a casing 8 and a cover 9.

The casing 8 is dish-shaped and has a lateral wall 10 on the inside of which the stator 2 is attached (by a method already known per se) and a bottom wall 11 which has a central recess 30 with a machined hole 12 through which the shaft 5 protrudes.

A toroidal ring 41 seals the juncture between the casing 8 and the cover 9 which are joined by means of screws 13 engaged in corresponding radial lugs 14 and 15 provided, respectively, on the casing 8 and the cover 9.

In addition to the lugs 14 for the attachment of the cover 9, the casing 8 is also equipped with cooling fins 14'.

Electrical power is supplied to the stator winding 3 by means of a cable 16 which passes through a sealed core hitch 17 located in a hole machined in the cover 9. Obviously, it would also be possible to pass the cable 16 through the casing 8, particularly in correspondence with the free end-part of the lateral wall 10.

The bearings 6 and 7 are held in position on the shaft 5 by means of respective Seeger rings 18 and 19 and are lodged in corresponding housings 20 and 21 machined respectively inside the bottom 11 of the casing 8 and inside the cover 9. Rubber bushings 24 and 25, with lateral conical points 26, are positioned between the external thrust blocks 22 and 23 of the bearings 6 and 7 and their respective housings 20 and 21.

These rubber bushings, in addition to absorbing the vibrations produced during the rotation of the shaft 5, also compensate for any axial play caused by the differences in the sizes of the casing, the cover and the Seeger ring housings 18 and 19, thus ensuring the axial stability of the shaft 5.

A fan-bearing cap 27 is attached to the end 5' of the shaft 5 which protrudes through the hole 12 in the casing 8. An extension 28 of this cap goes around the lateral wall 10 of the casing 8 and covers, at least partially, the stator 2. A fan 29 is attached to this extension 28.

The cap 27 is attached to the shaft 5 by means of the screw 31 inserted into a threaded hole 32 bored into the shaft. In particular, a hub 33 is force fit to the end 5' of the shaft 5, located in the recess 30 of the bottom 11 of the casing. Onto the hub 33 is attached a central locking ring 34 of the cap 27 which is axially locked by means of the screw 31 and a washer 35.

The hub 33 is equipped with fins 36 in order to generate air circulation in the space 37 between the casing and the cap and so contribute towards cooling the motor in that area.

The fan-bearing cap 27 is equipped with stiffening ribs 38 and can be equipped with slits 39 and associated external fins 40 positioned in such a way as to draw air into the space 37 between the cap and the casing while the fan is rotating and thus further assist the cooling of the motor in this area.

It is clear from the above that the electric motor, according to the model, fulfills the pre-set objectives.

The motor housing is made of two components: the casing 8 and the cover 9, connected one to the other by means of screws 13 with the insertion of a toroidal ring 41 ensuring a complete seal. The only machinings required for the casing 8 are those for obtaining the ledge for the cover 9, the stator housing 2 and the housing 20 for the bearing 6; for the cover 9 it is only necessary to machine the ledge for the casing and the housing 21 for the bearing 7.

As the shaft 5 is supported in two points by respective sealed bearings 6 and 7, the structure is very rigid and more capable of withstanding the stresses due to the dynamic imbalance of the rotating fan.

The presence of the rubber bushings 24 and 25 on bearings 6 and 7 guarantees good absorption and allows the axial play due to the different sizes of the component parts to be compensated for without the need for special elastic washers which complicate the assembly of the motor.

Such a structure also allows an optimum degree of protection (IP 55) against external agents while providing good casing ventilation.

The presence of the recess 30 on the bottom 11 of the casing 8 which houses the end 5' of the shaft 5 and the hub 33 joined thereon allows the axial dimensions of the cap 27 to be reduced to the minimum.

Furthermore, the fact that the fan is not rigidly connected to the rotating part of the motor means that is can be easily dismounted by unscrewing screw 31 and removing the fan-bearing cap 27. This allows the fan to be rapidly replaced and also means that the motor and the fan can be stored separately, with a significant saving of space and, consequently, a significant saving in the costs of packaging and delivery.

## Claims

1. An electric motor, particularly for use with fans, comprising a stator (2) fixed to a casing (8) and an internal rotor (4) rotating on a central shaft (5) and provided with a fan-bearing cap (27) extending, at least partially, on said casing (8), characterized in that said shaft (5) is integral with the rotor (4) and is supported between the bottom (11) of the casing (8) and a cover (9) sealing the casing (8), and that said fan-bearing cap (27) is removably fixed to one end (5') of the shaft (5).

2. An electric motor according to claim 1, characterized in that the seal between the casing (8) and the cover (9) is obtained by means of a toroidal ring (41) positioned between them.

3. An electric motor as claimed in claim 1, wherein said shaft (5) is supported by sealed bearings (6, 7) positioned in corresponding housings (20, 21) machined respectively inside the bottom (11) of the casing (8) and inside the cover (9), said end (5') of the shaft (5) protruding through a central hole (12) in the bottom (11) of the casing (8).

4. An electric motor, as claimed in claim 3, wherein said end (5') of the shaft (5) is housed in a recess (30) at the bottom (11) of the casing (8).

5. An electric motor, as claimed in claim 3 or 4, characterized in that said bearings (6, 7) are positioned in their respective housings (20, 21) with the interposition of respective rubber bushings (24, 25) which act both as shock absorbers and as axial compensators.

6. An electric motor, as claimed in claim 5, characterized in that said rubber bushings (24, 25) have protrusions (26) in the direction of the bottoms of their respective bearing housings (20, 21).

7. An electric motor, as claimed in any of the claims 1 to 6, characterized in that the fan-bearing cap (27) has an extension (28) which is substantially parallel to the side wall (10) of the casing (8), in order to create an interspace (37) between the casing and the extension (28) on which the fan (29) is mounted.

8. An electric motor, as claimed in any of the claims 1 to 7, characterized in that said fan-bearing cap (27) is attached to the end (5') of the shaft (5) by means of a screw (31) with the interposition of a hub (33) force fit to the shaft.

9. An electric motor, as claimed in claim 8, characterized in that said hub (33) is equipped with internal fins (36) for generating a current of air in the interspace (37) between the fan-bearing cap and the casing which cools the motor in this area.

10. An electric motor, as claimed in any of the claims 7 to 9, characterized in that said fan-bearing cap (27) is equipped with slits (39) on the outside of which fins (40) are provided, positioned in such a way that air is drawn into said space (37) between the cap and the casing during the rotation of the cap (27).

European
Patent Office

EUROPEAN SEARCH
REPORT

Application Number

EP 90 11 9489

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | DE-U-8 907 737 (HALM)<br>* page 3, line 19 - page 6, line 30; figures 1-3. * | 1,7.,2-6,<br>8,10. | H 02 K 5/10<br>H 02 K 7/14<br>H 02 K 9/14<br>F 16 C 27/06 |
| Y | DE-U-8 707 291 (SÜD-ELECTRIC)<br>* page 4, line 13 - page 5, line 7; figure 1. * | 2,3. | |
| Y | DE-C-3 738 592 (ZELLE)<br>* column 2, lines 29 - 55; figures 1-3. * | 4. | |
| Y | FR-A-1 320 919 (COURTEAU)<br>* page 1, right-hand column, line 35 - page 2, right-hand column, line 14; figures 1-4. * | 5. | |
| Y | US-A-2 728 593 (HUTTON)<br>* column 2, line 57 - column 4, line 62; figures 1-7. * | 6. | |
| Y | US-A-2 638 761 (HENRY)<br>* column 1, line 40 - column 2, line 30; figures 1, 2. * | 8. | |
| Y | DE-C-9 255 96 (SCHEURING)<br>* page 2, lines 45 - 53; figure 3. * | 10. | |
| A | GB-A-3 109 35 (DEUTSCHE GASGLÜHLICHT-AUER-GMBH)<br>* page 1, lines 10 - 48; figure * | 1. | |
| Y | US-A-2 051 033 (FELDERMANN)<br>* page 1, left-hand column, line 17 - right-hand column, line 40; figure * | 1,7,9. | |
| Y | FR-A-2 558 995 (SOCIETE DE PARIS ET DU RHONE)<br>* page 2, line 26 - page 4, line 1; figures 1, 2. * | 1,7,9. | |

**TECHNICAL FIELDS SEARCHED (Int. Cl.5)**

H 02 K
F 04 D
F 16 C

The present search report has been drawn up for all claims

| Place of search | Date of completion of search | Examiner |
|---|---|---|
| The Hague | 12 December 90 | TIO K.H. |